# EUROPEAN PATENT APPLICATION

(11) **EP 1 479 502 A1**
(43) Date of publication of application: **24.11.2004**
(21) Application number: 03731827.6
(22) Date of filing: 23.01.2003
(51) Int. Cl.: B29C 45/00, B29B 17/00, B29K 25/00

(54) **PROCESS FOR PRODUCING MOLDED ARTICLE OF RECLAIMED THERMOPLASTIC RESIN**

(30) Priority: 23.01.2002 JP 2002013765; 07.08.2002 JP 2002229903
(71) Applicant: Suzuka Fuji Xerox Co., Ltd., Suzuka-shi, Mie 519-0393 (JP)
(72) Inventor: SUZUKI, Yasuhiro, c/o Suzuka Fuji Xerox Co., Ltd., Suzuka-shi, Mie 519-0393 (JP)
(74) Representative: VOSSIUS & PARTNER
(86) International application number: PCT/JP2003/000619
(87) International publication number: WO 2003/061939

(57) **Abstract**

The object of the present invention is to provide a recycled molded article, not having defects such as sink, warping, bending, and the like, and whose molding contraction does not change substantially depending on its recycle turn number so that said molded article having a good dimensional stability can be manufactured without changing design of the injection molding machine or molding conditions in every turn.

To attain this object, the gas assist injection molding method or the expansion injection molding method wherein gas pressure or expansion pressure is effected on the melted molding material mixture in the mold, are applied in the present invention.

By applying these methods, the melted molding material mixture may fill the mold uniformly and contraction strain by cooling may be absorbed in the inner hollow or the foamed structure in the resulting molded article, and further change of mold contraction depending on recycle turn number is reduced to obtain a molded article having a good dimension stability.

## Description

### Field of the invention

The present invention relates to a method wherein a discarded thermoplastic resin molded article is recycled to produce a fresh thermoplastic resin molded article.

### Background of the invention

Recently, interest in the recycling of discarded thermoplastic resin molded articles has increased. In the recycling of said thermoplastic resin molded article, said discarded thermoplastic resin molded article is crushed, and said crushed resin molded article is used either, as is, as molding material, or is melted and extruded, and then cut into pellets to be used as molding material. (For example, see International open No.97/38838 Pamphlet (WO 97/38838)).

When said discarded resin mold is recycled, the recycled thermoplastic resin may degrade due to heat in the palletizing process or molding process, hence mechanical properties of recycled molded articles such as impact resistance may also be degraded. In particlular, thermoplastic resin containing a diene group rubber, such as acrylonitrile-butadiene-styrene copolymer resin (ABS), high impact resistance polystyrene (HIPS), ABS and/ or HIPS modified polyphenylene ether (modified PPE) and the like, shows remarkable degradation of mechanical property when recycled, since the unsaturated bond in diene may be cut in the recycling process. Further, olefinic resin having methyl group at α-position such as polypropylene also degrades remarkably since polymer chain of said olefinic resin is easily cut by electric explusion force of methyl group. As a means to prevent the mechanical properties of said thermoplastic resin from degrading during the recycling process, a recycle aid agent which is added to said recycled thermoplastic resin is provided. Said recycle aid agent may be such as rubber-like material having compatibility with said recycled thermoplastic resin (For example, see International open No 00/53384 Pamphlet (WO 00/53384)).

To manufacture thermoplastic resin molded article, mainly injection-molding is applied. However, thermoplastic resin is degraded by heat history in recycling process as described above and melt fluidity of the recycled thermoplastic resin is changed. This change in melt fluidity may occur even in a case where more than 1% by weight, especially more than 5% by weight of said recycled thermoplastic resin is added to virgin thermoplastic resin. Further, even in a case in which a recycle aid agent is added to prevent the properties of the material from degrading, the melt fluidity of the thermoplastic resin changes. Said change of melt fluidity may impair the filling property of said melted thermoplastic resin in the mold, and defects such as sink, warping, bending, and the like, may be produced in the resulting resin molded article.

Further, due to changing mold shrinkage in the molding process, the dimensional accuracy of the resulting molded article may be affected.

To solve above described problems, a means to raise injection pressure may be considered, however, since said thermoplastic resin's melt fluidity is subject to change whenever recycled, the conditions of injection-molding such as injection pressure, injection temperature, and the like should be newly settled whenever said recycled thermoplastic resin is injection-molded, so that design of mold should be changed whenever said recycled thermoplastic resin is injection-molded.

### DISCLOUSURE OF THE INVENTION

The present invention provides a method for manufacturing a molded article comprising molding recycled thermoplastic resin or a mixture of said recycled thermoplastic resin and virgin thermoplastic resin, said mixture containing said recycled thermoplastic resin in an amount of at least 1% by weight, by gas assist injection molding or expansion injection molding, wherein said recycled thermoplastic resin is recovered from a discarded thermoplastic resin molded article.

Herein said discarded thermoplastic resin molded article includes used resin molded article withdrawn from the market, fin, flash, or spew produced during the molding process, thermoplastic resin accumulated in the sprue, runner, and the like in the injection molding machine, cutting or shaving dust produced in the trimming process, and assembly process of resin products and products being of bad quality.

Useful thermoplastic resins for the present invention are styrenic resin and olefinic resin, especially thermoplastic resins containing diene group rubber and/or olefinic rubber and/or acrylic rubber. When said recycled thermoplastic resin or said mixture is injection-molded, 1 to 5 % by weight of rubber-like material having compatibility with said thermoplastic resin is preferably added to said thermoplastic resin as a recycle aid agent.

In a case where said thermoplastic resin is a styrenic resin, a graft polymer in which a diene group rubber and/or olefinic rubber and/or acrylic rubber is(are) the trunk and polymer chain having compatibility with said styrenic resin is grafted polymer chain, is preferably selected as rubber-like material having compatibility with said styrenic resin, and in the case where said thermoplastic resin is olefinic resin, ethylene-α-olefin copolymer is preferably selected as the rubber-like material having compatibility with said olefinic resin.

On the surface of said molded article made of recycled thermoplastic resin, paint or ink using thermoplastic resin having compatibility with said thermoplastic resin or thermosetting resin as a vehicle is applied and/or sheeting made of thermoplastic resin having compatibility with said thermoplastic resin of said molded article is attached using an adhesive made of thermoplastic resin having compatibility with said thermoplastic resin of said molded article or thermosetting resin, or said molded article made of recycled thermoplastic resin consists of a main body and attachment(s) joined to said main body with an adhesive or a welding rod, said adhesive being made of thermoplastic resin having compatibility with said thermoplastic resin of said molded article or thermosetting resin, and said welding rod being made of thermoplastic resin having compatibility with said thermoplastic resin of said molded article.

Said molded article made of recycled thermoplastic resin can be recycled by crushing, as is, unless said paint film or ink film or said sheeting is peeled to remove or said adhesive or welding rod is removed, so that said molded article can be recycled without undergoing the separation process.

### BRIEF DESCRIPTION OF DRAWING

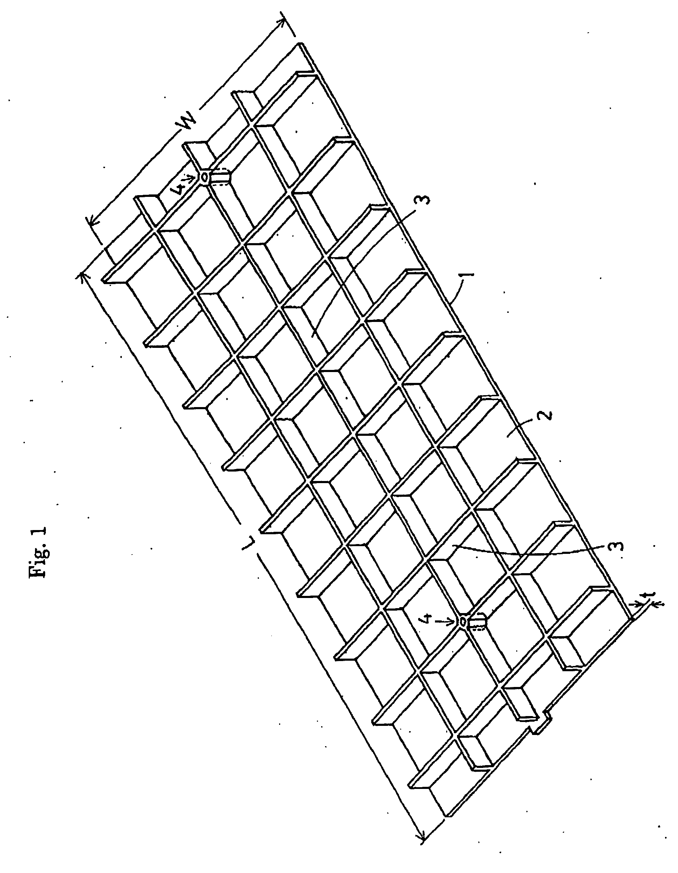

Fig.1 is a perspective view illustrating an embodiment of a molded article made of recycled thermoplastic resin in the present invention.

### Description of Notations

1. molded article
2. panel
3. ribs
4. gas inlet

### PREFERRED EMBODIMENT

### [Thermoplastic resin molded article]

Thermoplastic resin molded article recycled in the present invention is generally a molded article in which thermoplastic resin is used. Said resin mold included articles all kinds of resin molded article such as parts or cabinets used in cars, vehicles, OA instruments, household electrical appliances, and the like, or stationery.

Said thermoplastic resin used in said resin molded articles includes all kinds of thermoplastic resin used as molding materials, and said thermoplastic resin is such as; a styrene resin such as polystyrene(PS), acrylonitril·butadiene·styrene(ABS), acrylonitril·acrylic rubber·styrene copolymer(AAS,ASA), acrylonitril·ethylene rubber·styrene copolymer(AES), high impact polystyrene(HIPS), acrylonitril·styrene copolymer(AS), acrylonitril·polyethylene chloride·styrene copolymer(ACS)and the like, a olefin resin such as polyethylene(PE), polypropylene(PP), ethylene·propylene copolymer, ethylene·vinyl acetate copolymer(EVA), ionomer, and the like, an acrylic resin such as polymethylmethacrylate(PMMA), methylmethacrylate-styrene copolymer and the like, a vinyl chloride resin such as polyvinyl chloride(PVC), polyvinylidene chloride, vinyl chloride·polyvinylidene chloride copolymer and the like, a engineering plastic such as vinyl chloride resin, polycarbonate(PC), polyphenylene ether(PPE), modified polyphenylene ether(Modified PPE), polyetherimide(PEI), polysulfone(PSF) an the like, a styrene thermoplastic elastomer such as styrene·butadiene·styrene block copolymer(SBS), styrene·isoprene·styrene block copolymer(SIS), styrene·butylene·styrene block copolymer(SEBS), styrene·ethylene·propylene·styrene block copolymer(SEPS) and the like, a thermoplastic polyurethane elastomer, olefin group elastomer, or a polymeralloy of PPand ethylene·propylene rubber(EPM or EPDM), a polymeralloy of ABS and PC, a polymeralloy of HIPS and PC, a polymeralloy of ABS and polybutylenetetraphthalate(PBT) and the like.

In said thermoplastic resin, ; a filler such as:glass fiber, glass beads, carbon fiber, ceramic fiber, metallic fiber, mica, talc, calcium carbonate, aluminium silicate, kaolin, silica, metha-calcium carbonate, asphaltic attritive -powder, zeolite, diatom earth, silica sand, pumice powder, slate powder, alumina, oxidosome, aluminum sulfate, barium sulfate, lithopon, calcium sulfate, magnesia, molybdenum disufide, rubber powder; ebonite powder, shellac, wood flour, coconut- shell flour, cork flour, cellouse powder, wood pulp, paper, cloth, mica powder, graphite, glass ball(GB), volcanic-glass hollower, carbon hollower, anthracite smalls, artifical sodium fluoroaluminate, silicone attritive powder, silica-gel sphere corpuscle and the like, a plasticizer, an age resister, an ultraviolet absorber, a fiame restardant an the like may be added. Useful thermoplastic resins in the present invention are styrenic resin and olefinic resin used as general molding materials and especially useful resins are thermoplastic resins containing diene group rubber such as butadiene rubber, isoprene rubber, chloroprene rubber and the like, and α-olefin resin.

Typical thermoplastic resin containing said diene rubber is such as ABS HIPS and modified PPE, and typical α-olefin resin is polypropylene.

Said diene group rubber contains unsaturated bond which is easily cut by the heat or mechanical shearing force effected during recycling process. Further, α-olefin has methyl group at α-position and polymer chain is easily cut by the stress effects of the heat or mechanical shearing force during recycling process since methyl group has the ability to expel electricity. As a result, said thermoplastic resin containing diene group rubber or α-olefin resin shows remarkable degradation of mechanical properties during recycle process and its melt fluidity is easily changed.

Said discarded thermoplastic resin molded article may be crushed by a well known method and said crushed thermoplastic resin molded material is used as molding material as is to mold recycled thermoplastic resin molded material, or if desired, said crushed thermoplastic resin mold is pelletizied as pellet type molding material. Said crushed thermoplastic resin molded article or said pellet type molding material (recycled thermoplastic resin) may be mixed in with virgin thermoplastic resin. In this case, said recycled thermoplastic resin is desirably mixed in with said virgin thermoplastic resin in an amount of more than 1 % by weight, more desirably more than 5 % by weight, taking into consideration the effectiveness of the recycling process. Even in a case where said recycled thermoplastic resin is mixed into said virgin thermoplastic resin in the amounts described above, the melt fluidity of said recycled thermoplastic resin changes during recycle process, so that the present invention is usefully provided to the mixture of said recycled thermoplastic resin and said virgin thermoplastic resin.

### [Coating, Printing]

Occasionally, paint is coated or ink is printed on the surface of said thermoplastic resin molded article. In this case, the resin used as a vehicle for said paint or said ink has desirably compatibility with thermoplastic resin of said molded article, or the resin is desirably thermosetting resin. In the present invention, "thermoplastic resin A having compatibility with thermoplastic resin B" means that resin A and resin B are mixed together at a molecular level or resin A or resin B is dispersed into the respective other, forming a sea island structure. Thermoplastic resin having compatibility with said styrenic resin is such as styrenic resin, PPE, modified PPE, PE, PC and the like, thermoplastic resin having compatibility with PPE or modified PPE is such as PPE modified PPE, styrenic resin, PC and the like, and thermoplastic resin having compatibility with olefinic resin is such as olefinic resin, halogenated olefinic resin, and the like.

In particular, considering properties being suitable for paint or ink such as solubility, coating film drying properties, coating workability, printing workability, and the like, paint or ink containing styrene modified acrylic resin as a vehicle is preferably used for the molded article made of styrenic resin, PPE modified PPE, PC, and the like.

Said styrene modified acrylic resin is a copolymer consisting of styrene and acrylic ester. As said acrylic ester, an acrylate such as: methylacrylate, ethylacrylate, n-propylacrylate, iso-propyl acrylate, n-butyl acrylate, iso-butyl acrylate, t-butylacrylate, 2-ethylhexylacrylate, cyclohexyl acrylate, tetrahydrofurfurylacrylate, and the like, and a methacrylate such as: methyl methacrylate, ethylmethacrylate, n-propylmethacrylate, iso-propylmethacrylate, n-butylmethacrylate, iso-propyl methacrylate, 2-ethylhexylmethacrylate, cyclohexyl methacrylate, tetrahydrofurfuryl methacrylate, stearyl methacrylate, lauryl methacrylate and the like may be usd.

A monomer such as a vinylether such as: methylvinylether, ethylvinylether, n-propylvinyl ether, n-butylvinylether, iso-butylvinylether and the like, a nitril monomer such as: acrylonitrile, methacrylonitrile, and the like, an aliphatic vinyl such as: vinylacetate, vinyl propionate and the like, a halogen contained monomer such as: vinyl chloride, vinylidene chloride, vinylidene fluoride, vinyl fluoride and the like, a olefin such as: ethylene, propylene and the like, a diene such as: isoprene, chloroprene, butadiene and the like, α, β-unsaturated carboxylic acid such as: acrylic acid, methacrylic acid, itaconic acid, maleic acid, crotonic acid, atropic acid, citraconic acid and the like, a hydroxyl group contained monomer such as: hydroxyethyl methacrylate, hydroxyethyl acrylate, hydroxypropyl methacrylate, hydroxypropyl acrylate, ally alcohol and the like, a amide be contained monomer such as : acrylamide, methacrylamide, diacetone acrylamide, and the like, a amino group such as: dimethylamino methylmethacrylate, dimethylamino ethylmethacrylate, dimethylamino propylacrylate and the like, a epoxy group contained monomer such as: glycidylacrylate, glycidyl methacrylate, glycidyl allyl ether and the like, a monomer of a hydrolysis silyl group contained vinyl monomer such as: γ-methacrylatepropyltrimethoxy silane, vinylacetoxy silane, p-trimethoxy silyl styrene, p-triethoxy silyl styrene, p-trimethoxy silyl-α-methyl styrene, p-triethoxy silyl-α-methyl styrene, γ-(methacrylate)propyltrimethoxy silane, vinyltrimethoxy silane, N-β-(N-vinylbenzylaminoethyl-γ-aminopropyl) trimethoxy silane))·hydrochloride and the like, and the like may be copolymerized in said styrene modified acrylic resin so long as said styrene modified acrylic resin keeps compatibility with said resin mold. Said monomer may be used singly, or two or more kinds of said monomers may be used together.

Further, to improve drying and mechanical properties of the coating film of said styrene modified acrylic resin, usually cellulose derivative is added to said styrene modified acryl resin, and non-yellowing type cellulose derivative which does not change color due to heating during recycling is preferably selected. Said non-yellowing type cellulose derivatives include such as ethyl cellulose, acetyl cellulose, benzyl cellulose, cellulose acetate butyrate, and the like.

Said styrene modified acrylic resin has excellent solvent solubility, and a solution of said styrene modified acrylic resin does not become stringy, resulting in an excellent coating workability, and has excellent adhesive properties to the resin molded article, and further, has compatibility with styrenic resin. For the molded article made of olefinic resin, paint or ink containing halogenated olefinic resin such as chlorinated polypropylene as a vehicle is preferably used. Said halogenated olefinic resin has an excellent solvent solubility, and excellent adhesive properties to the resin molded article, and, further, has compatibility with olefinic resin.

Said thermosetting resin includes such as urea resin, melamine resin, urea-melamine co-condensation resin, benzoguanamine resin, phenol resin, resorcinol resin, epoxy resin, thermosetting urethane resin, thermosetting acrylic resin, melamine-alkyd resin, and the like.

A discarded molded article coated or printed with said paint or ink can be recycled by crushing as is without separating coating film from the resin molded article. In the case where the paint or ink containing the resin having compatibility with the resin molded article as a vehicle is used, the mechanical properties of the recycled resin mold is not degraded, since said resin in the paint or ink is compatible with the resin of the molded article in a melted state without separation. Further, in the case where the paint or ink containing thermosetting resin as a vehicle is used, the coating film is crushed together with the discarded molded article without separation prior to crushing and said crushed thermosetting resin is dispersed in the recycled molded article as filler, not to degrade the mechanical properties of the recycled molded article.

### [Complex resin molded article]

This resin molded article includes the complex resin molded article wherein label(s), seal(s), and the like, is(are) attached to the resin molded article, said complex resin molded article consisting of a main body and attachment(s) joined thereto with an adhesive or welding rod. Said attachments include a frame(s), leg(s), boss, label(s) (decalcomania), and the like, joined to said main body.

In said complex resin molded article, said main body, attachment(s), adhesive or welding rod are preferably made of thermoplastic(s) having compatibility with each other, and thermosetting resin as an adhesive can be applied. Said resins having compatibility with each other are as follows: resins having compatibility with styrenic resin are such as styrenic resin, PPE, modified PPE, PC, styrene modified acryl resin and the like, resins having compatibility with PPE or modified PPE are such as PPE, modified PPE, styrenic resin, PC, styrene modified acrylic resin, and the like, and resins having compatibility with olefinic resin are such as olefinic resin, halogenated olefinic resin, and the like.

Further, an adhesive or welding rod applied to the resin molded article made of styrenic resin, PPE, modified PPE, PC, or the like, is preferably made of styrene modified acrylic resin.

Said styrene modified acrylic resin may be the same as the styrene modified acrylic resin used as a vehicle in said paint or ink, and in a case where said styrene modified acrylic resin is used as an adhesive, said styrene modified acrylic resin has excellent solvent solubility, the resulting solution not being stringy, resulting in an excellent coating workability, and in a case where said styrene modified acrylic resin is used for a welding rod, said welding rod is easily melted, resulting in an excellent welding workability and further, has an excellent adhesiveness to the resin molded article.

In a case of said complex resin molded article wherein a main body, attachment(s), adhesive or welding rod have compatibility with each other, said complex resin molded article can be recycled by crushing, as is without disassembling and/or parts separation. Further, said complex resin molded article is preferably coated or printed with paint or ink containing resin having compatibility with said complex resin molded article. Said resin molded article, when discarded, can be recycled by crushing as is without disassembling and/or part separation. Further, in a case where thermosetting resin is used as an adhesive, said thermosetting resin is crushed and dispersed in the recycled resin molded article as filler in the same manner as paint or ink. In a case where thermoplastic sheeting is attached with an adhesive, the thermoplastic resin composing said sheeting or adhesive is selected to have compatibility with the thermoplastic resin composing said resin molded article or in the case of an adhesive, thermosetting resin is to be selected.

### [Recycle]

When recycled, said discarded resin molded article is crushed as described above, and said crushed molded article is injection molded as is or said crushed molded article is extruded in string form from an extruder and then with a rotary cutter cut to form pellets, which are then injection-molded. As described above, recycled thermoplastic resin from a crushed molded article may be mixed with virgin thermoplastic resin before injection molding. In this case, said recycled thermoplastic resin may be mixed in with said virgin thermoplastic resin in an amount of more than 1% weight, and desirably 5% by weight.

In the case where said recycled thermoplastic resin is mixed in with said virgin thermoplastic resin, the resulting mixture is injection molded as is, or pelletized, the resulting pellets then being injection molded.

When the resin molded article is recycled, a recycle aid agent may be added to said recycled thermoplastic resin to improve the mechanical properties of recycled resin molded article. Said recycle aid agent is illustrated below.

### [Recycle aid agent]

The rubber like material used as a recycle aid agent for styrenic resin, PPE, modified PPE, and PC is a graft rubber, wherein the trunk part is a diene group rubber, olefin group rubber or acrylic rubber, and the branch part is a graft chain having compatibility with said styrenic resin, PPE, modified PPE, and PC.

Preferable rubber like material is olefin group rubber graft polymer or acrylic rubber graft polymer, since they have good thermal stability.

Each rubber like material is illustrated below.

### A: Olefin group rubber graft-polymer

Said olefin group rubber used in said equal quality recycle aid agent of the present invention is polymer or copolymer of one or more kind(s) of an α-olefin or copolymer of one or more kind(s) of said α-olefin and one or more kind (s) of other monomer(s) which can be copolymerized with said α-olefin(s). Typically, said olefin group rubber may be copolymer of ethylene and one or more kind(s) of other α-olefin(s) or copolymer of ethylene and one or more kind(s) of other α-olefin(s) and other monomer(s) which can be copolymerized with said α-olefin, especially said other monomer is non-conjugated diene compound.

In said ethylene- α-olefin group copolymer, α-olefin which is copolymerized with ethylene may be α-olefin having 3 to 12 carbon atoms such as propylene, butene-1, 4-methyl pentene-1, hexane-1, Octene-1, and the like.

Said non-conjugated diene compound may be such as dicyclopentadiene, tricyclopentadiene, 5-methyl-2,5-norbornadiene, 5-methylene-2-norbornene, 5-vinyl-2-norbornene, 5-ethylidene-2-norbornene, 5-isopropylidene-2-norbornene, 5-isopropenyl-2-norbornene, 5-(1-butenyl)-2-norbornene, 5-(2-propenyl)-2- norbornene, 5-(5-hexenyl)-2-norbornene, 4,7,8,9-tetrahydro-indene, isopropylidenetetrahydro-indene, cyclooctadiene, vinylcyclohexene, 1,5,9-cyclododecatoluene, 6-methyl-4,7,8,9-tetrahydroindene, 2,2'-dicyclopentenyl, trans-1,2-divinylcyclobutane, 1,4-hexadiene, 2-methyl-1, 4-hexadien, 1,6-octadien, 1,7-octadien, 1,8-nonadiene, 1,9-decadiene, 3,6-dimethyl-1,7-octadiene, 4,5-dinethyl-1,7-octadiene, 1,4,7-octatriene, 5-methyl-1,8-nonadiene and the like.

Preferably said non-conjugated diene compound may be 5-ethylilidine-2-norbornen(ENB) and/or dicyclopentadiene(DCP), more preferably dicyclopentadiene.

In said olefin group rubber, as a main component, EPDM gives greater impact resistance to the thermoplastic resin used for molding than EPM.

Typical olefin group rubber may be ethylene-propylene copolymer rubber (EPM), ethylene-propylene-non-conjugated diene compound terpolymer (EPDM), ethylene-butene copolymer rubber (EBM), ethylene-butene-non-conjugated diene compound terpolymer(EBDM). The same non- conjugated diene compound as used in EPDM may be used in EBDM.

To give compatibility with the objective styrenic thermoplastic resin to said olefin group rubber, styrene group monomer is graft-copolymerized to said olefin group rubber and especially in the case where the objective styrenic thermoplastic resin is acrylonitrile copolymer such as ABS, AAS, ASA, AES, AS, ACS and the like, styrene group monomer and nitrile group monomer are graft-copolymerized to said olefin group rubber.

Said styrene group monomer being graft-copolymerized to said olefin group rubber may be such as one or more kinds of styrene monomers comprising styrene, α-alkylmonovinylidene aromatic monomer (e.g. α-methylstyrene, α-ethylstyrene, α-methylvinyltoluene, α-methyldialkylstyrene and the like), cyclo-substituted alkylstyrene (e.g. *o, m,* or *p*-vinyltoluene, *o*-ethylstyrene, *p*-ethylstyrene, 2,4-dimethylstyrene, p-*tert* butylstyrene and the like), cyclo-substituted halo styrene (e.g. *o*-chlorostyrene, *p*-chlorostyrene, *o*-bromostyrene, 2,4-dichlorostyrene and the like), cyclo-alkyl, cyclo halo substituted styrene (e.g. 2-chloro-4-methylstyrene, 2,6-dichlorostyrene and the like), vinyl naphthalene, vinyl anthracene and the like.

Commonly, said alkyl substitution group has 1 to 4 carbon atoms, and both straight chain and branched chain alkyl groups are included in said alkyl substitution group. Said nitril group monomer graft-copolymeraized to said olefin group rubber together with said styrene group monomer is such as acrylonitrile, methacrylonitrile, ethacrylonitrile, fumanonitrile, and a mixture of two or more kinds of said nitriles, and the like. Other monomer(s) besides said styrene group monomer and nitrile group monomer can be copolymerized.

### B: Acrylic rubber graft polymer

Said acrylic rubber used in the present invention may be such as acrylate homopolymer having alkyl group having 2 to 8 carbon atoms preferably, such as ethylacrylate, n-butylacrylate, 2-ethylhexylacrylate and the like, copolymer comprising two kinds and over of acrylate monomers mentioned above, copolymer comprising one or more kinds of acrylate monomer(s) mentioned above and butadiene or one or more kinds of other monomer(s) such as non-conjugated diene compounds which can be used for EPDM similarly, copolymer comprising one or more kinds of monomer(s) such as acrylonitrile, methylmethacrylate, vinyl acetate, styrene, ethylene, propylene and the like, functional monomer(s) such as acrylic acid methacrylic acid, β-hydroxyethylmethacrylate, acrylamide, dimethylaminoethylmethacrylate and the like, or polymerization silane coupling agent(s) such as γ-methacryloxypropyltrimethoxysilane, vinyltriacetoxysilane, *p*-trimethoxysilylstyrene, *p*-triethoxysilylstyrene, *p*-trimethoxysilyl-α-methylstyrene, *p*-triethoxysilyl-α-methylstyrene, γ-acryloxypropyltrimethoxysilane, vinyltrimethoxysilane, N-β(N-vinylbenzylaminoethyl-γ-aminopropyl) trimethoxysilane hydrochloride and the like.

As acrylic rubber for common use, copolymers such as polyethyl acrylate, poly n-butyl acrylate, n-butyl acrylate-acrylonitrile copolymer, n-butylacrylate-butadiene copolymer, n-butyl acrylate-ethylene copolymer, n-butyl acrylate-γ-methacryloxypropyltrimethoxysilane copolymer, n-butylacrylate-vinyltrimethoxysilane copolymer and the like in which a small amount of said functional monomer(s) is(are) copolymerized may be used in this invention.

Normal-Butyl acrylate-butadiene copolymer having a mole ratio of over 30/70 n-butylacrylate/butadiene is preferable for acrylic rubber.

Styrene group monomer(s), alone or combined with nitrile group monomer(s) are graft polymerized to said acrylic rubber to give said acrylic rubber compatibility with styrene group resin, PPE group resin and PC group resin in the same manner as with said olefin group rubber.

Said recycle aid agent is mixed in with said crushed discarded resin mold, and the resulting mixture is injection molded as is, or pelletized, and said pellets are injection-molded. Said recycled aid agent may be added to said crushed discarded resin molded article(recycled resin) in an amount of 1 to 10 % by weight.

### [Other component]

In the recycling of thermoplastic resin, fillers, plasticizers, antioxidants, UV absorbers, flame-retardants, and the like, may be added to the in recycled thermoplastic resin.

### [Molding]

In the present invention, injection-molding is applied in the manufacture of recycled resin molded article and substantial uniform pressure is effected on the melted molding materials in the mold cavity besides injection pressure to prevent molding defects such as sink marks, bending, warping, and the like, and to secure dimensional accuracy of the resulting molded product. Said method of injection-molding includes gas assist injection molding method and expansion injection molding method.

### [Expansion injection molding method]

The expansion injection molding method includes chemical foaming method and mechanical foaming method. Blowing agents used in said chemical foaming method include inorganic blowing agents such as water, dry ice, carbonate or hydrogen carbonate such as sodium hydrogen carbonate, sodium carbonate, potassium hydrogen carbonate, and the like, hydride such as litium-boron hydride, sodium-boron hydride, and the like, nitrite such as ammonium nitrite, sodium nitrite, and the like, combination of metal such as magnesium, aluminum, zinc, and the like and acid or alkali, and organic blowing agents such an azo compound such as ; dinitroso-pentamethylenenaphthalene; dinitroso-pentamethylenetetramine, trinitroso-methylenetriamine, 2,2'-azobissobutyronitrile, hydrodicarbonamide, N , N'-dimethyl-N,N'-dinitrosoterephthalamide, azodi carbonamide , bariumazodicarboxylate, para-toluensulfonl hydrazide, 2, 4-toluensulfonl hydrazide, p-methylurethanebenzene sulfonl hydrazide, oxalyl hydrazide, p,p'-oxybis(benzene sulfonl hydrazide), p,p'-oxybis(benzene sulfonl semicarbazide), p-toluensulfonl azide, p-toluensulfonl semicarbazide, toluene-p-sulfonl acetone hydrazone, trihydrazine, triazine, diazoaminobenzene, 1, 1'-azobisformamide, nitrourea, nitroguanidine and the like, a chemical blowing agent such as ; hydrazine derivative, semicarbazide compound, azide, nitroso compound, triazole compound an the like hydrocarbon such as hexane, heptane, cyclohexane, octane, gasoline, and the like, halogenated hydrocarbon such as dichiloroethane, methylene choride, and the like, alcohol such as methanol, ethanol, isopropanal, and the like, solvent having a low boiling point such as ethyl ether, methyl-ethyl ether and the like, formable capsule wherein said solvent having a low boiling point is sealed in thermoplastic resin shell, and the like.

In said mechanical foaming method, gas such as air, nitrogen gas, steam, carbon dioxide, or the like, is mixed in with melted molding materials. Said mixing of gas into melted mold materials is carried out by the injection of said gas into the melted mold material range in the heating cylinder of the injection molding machine to mix said gas with a screw into said melted molding materials, or said mixing of gas into said melted molding materials is carried out by injecting said gas into said melted molding material from the nozzle arranged at the end of said heating cylinder. In this case by setting proper pressure and proper temperature in said heating cylinder, said gas, especially carbon dioxide, can be put in a supercritical state. Alternatively said gas put in the supercritical state beforehand may be introduced into said heating cylinder. Said gas put in the supercritical state can be easily mixed and dissolved into said melted molding materials in a large amount, and said gas put in the supercritical state acts as a solvent to improve flowabitily, and further, improve injection-moldability.

In said expansion injection molding, as is generally known, said melted molding materials are injected into the mold cavity while foaming in said heating cylinder or said nozzle area by said chemical foaming method or said mechanical foaming method, and a desirable method is the gas counter pressure (GCP) method wherein air, or inert gas such as nitrogen gas, carbon dioxide gas, and the like in the case where gas burning of said melted molding materials is feared to produce by contacting air, is enclosed in the cavity beforehand and then said melted molding materials being foamed are injected into the cavity, and said air or inert gas is released into the atmosphere during or after holding pressure to form a foaming structure.

Further, in the present invention, various following methods can be applied. Said methods may be such as Ex-cell-O method wherein said melted molding materials being foamed is injected into the mold cavity from a plural number of nozzles, USM(Trade mark) method in the United States wherein said melted molding materials are injected into the expandable mold cavity and after said melted molding materials are injected, said expandable cavity is wholly or partially expanded (recession or recess) to decrease the inner pressure to foam said melted molding materials, TAF(Trade mark) method developed joyntly by Toshiba Machine Co., Ltd. and Asahi Dow Co., Allied Chemical Co.'s method wherein a screw is inserted in a heating cylinder being slidable toward the back and after said melted molding materials are injected into the mold cavity, said screw is slid toward the back to reduce the inner pressure of the cavity to make said melted molding materials foam, Mucel(Trade mark) process of Trekcel Co. in the United State. wherein carbon dioxide in a supercritical state is applied, AMOTEC(Trade mark) developed by Asahi Chemical Industry Co., Ltd., wherein carbon dioxide is used for GCP to apply said carbon dioxide as a plasticizer of the resin to improve the fluidity of the melted resin to make the filling of said melted resin into the mold easier, and to transfer the shape of the mold surface to the resin mold with a high accuracy, and the like.

In said expansion injection-molding, expanding pressure such as generated by decomposition of said blowing agent, vapor pressure of said solvent having a low boiling point, pressure of carbon dioxide gas and the like are effected on said melted molding materials in the mold, and said melted molding materials may flow and fill uniformly in the mold to absorb and prevent contraction of the resulting resin mold in the mold during cooling by expansion structure produced in said resin mold, so that generating defects of the resin mold such as sink, warping, bending, and the like is prevented. Further, a skin layer is formed on the surface of the resulting resin mold, said surface contacting with the inner face of the cavity, and in the inside of said skin, the expansion structure is formed.

### [Gas assist injection-molding]

Gas assist injection-molding is a method for molding wherein said melted molding materials are injected into the mold cavity with introducing gas such as nitrogen gas, air, and the like, said gas being compressed to have a high pressure, and the pressure in the mold is held by said gas and the mold is cooled by said gas. Said gas assist injection-molding includes two methods depending on injecting methods of said melted molding materials and said gas, and injecting volume of said melted molding materials and said gas.

One method is that the volume of said melted molding materials is set to be less than inner space volume of the cavity (short shot), and said gas is introduced to the outside of said melted molding materials in the cavity to mold said melted molding material by said gas after said melted molding materials are injected. This method is suitable to mold a rod shaped resin mold, thick resin mold, resin mold having a large volume of a hollow part in said resin mold. The other method is that substantially the same volume of said melted molding materials as the space volume of the cavity is injected into the mold (full shot) and then said gas is introduced into the cavity to hold the inner pressure of the cavity and the volume of said gas being injected is set to be the equal volume to the contraction volume of said melted molding materials by cooling, and this method is suitable to mold a thin, tabular mold. Said gas is injected into the mold cavity directly or through the nozzle of the heating cylinder or through the runner.

Typical gas assist injection-molding applied in the present invention includes Asahi Gas Injection method (AGI: Trade name) of Asahi Chemical Industry Co., Ltd., Running (or RiP Topla) Floating Core Mold (Molding) method (RFM method: Trade name), Gas Press Injection method (GPI method: Trade name), High Hollow Mold (Molding) method (H²M method: Trade name), Sympress method (Trade name) of Mitsubichi Gas Chemical Co., Ltd., GAIN Technology of the United States, Air Mold method of Baltenfeld Co., in Germany, Gas Injection Mold method (GIM method: Trade name) of Idemitsu Petrochemical Co., Ltd., Partial Frame Process (PFP method: Trade name) of Nippon Steel Chemical Co., Ltd.(Shin Nittetsu Kagaku Co., Ltd.), and the like. Further, the method wherein high pressure liquid is used instead of high pressure gas such as blow molding method (HELGA method: Trade mark) of HETINGER Co., wherein liquid being easily vaporized is used, is also applied in the present invention. Still further, combination of the expansion injection-molding such as said GCP method, or the expansion injection-molding in which carbon dioxide in a supercritical state is used, and the like, and gas assist injection-molding method can be applied in the present invention. As a means to inject high pressure gas into the cavity directly or through the runner, commonly a needle pin is used, and the nozzle with a check ball to prevent the gas's backward flow also can be used. Further, said needle pin has preferably a sharp tip having a tip angle smaller than 100°, and further said needle pin has preferably double cylinder structure wherein gas is supplied between the outer cylinder and the inner cylinder.

Said needle pin is easily heated by said melted molding materials and in a case where said needle pin has a sharp tip, the solidified surface layer of said melted molding materials tends to be thin so that said thin solidified surface layer is easily broken even under a low gas pressure, said gas being easily injected into said melted molding materials.

In said gas assist injection-molding, defects such as sink, bending, warping and the like are prevented by effecting the gas pressure on said melted molding materials in the cavity and contraction of the resulting resin mold by cooling is also absorbed by gas holes formed in the resin mold to prevent defects caused by said contraction such as sink, bending, warping, and the like.

The present invention is illustrated by the following EXAMPLES. However, these EXAMPLES do not limit the scope of the present invention.

### EXAMPLE 1 (Shape of the resin molded article and resins for molding)

A resin molded article (1) consisting of a base board (2) and ribs (3) formed in a check pattern on the one the side of said base board (2) shown in Fig. 1 was molded using ABS, HIPS, HIPS containing diene group rubber, modified PPE respectively, the resulting resin molded article(1) then being respectively crushed and pelltized, and then molded again to manufacture the same resin molded article (1) shown in Fig. 1.

Said resin molded article(1) was molded by the solid injection-molding or gas assist injection-molding, the sizes of said base board (2) being 450mm in length, and 200mm in width, with a thickness of 3mm, said ribs (3) being 15mm in height, with a 2.6mm under-edge thickness (about 87% of the thickness of said base board (2) : 3mm), said ribs(3) having a lateral and lengthwise pitch of 50mm respectively. The injection mold used had one gate connecting it to the side of said mold, size of said gate being 3×10mm.

The sizes of said resin molded article(1) manufactured by the expansion injection-molding were the same as those of said resin molded article manufactured by the solid injection-molding except for that the thickness of said base board, which was set to be 6mm.

### (Solid injection-molding)

In said injection-molding, the injection rate (filling rate of said melted molding materials ) was set to be 70%, injecting pressure of said melted molding materials (primary pressure) was set to be 70%, confirming the secondary pressure (holding pressure) to obtain the most suitable looking resultant resin molded article. Considering the above described results, in the case of virgin resin material, the settings were settled to be 65%, in the case of 1 turn recycled resin material, 55%, in the case of 2 turns and 3 turns recycled resin materials, 45% respectively, with an injection time of 10 seconds, and cooling period of 30 seconds, after which said resulting resin molded article was removed from said mold.

### (Gas assist injection-molding)

The filling rate and injecting pressure were set to be the same as in said solid injection-molding and after said melted molding materials were wholly filled to the cavity of said mold, immediately ( 0.5 seconds after primary pressure was effected, and secondary pressure started) nitrogen gas was injected into the resin mold from a gas needle arranged in the a position shown by the arrow in Fig. 1 at a pressure setting 15 MPa for 10 seconds, and then after 15 seconds holding, the nitrogen gas was released in the atmosphere. After cooling for 30 seconds (the same as in the case of said solid injection-molding), the resulting resin molded article was removed

The conditions of said gas injection were set to be the same for both the case of virgin resin material and the case of a recycled resin material, since both resin molded articles obtain appeared to be identical.

### (Expansion injection-molding)

As blowing agents, 0.2 parts by weight of ADCA (Azodicarbonamide) and 0.1 parts by weight of sodiumhydrogencarbonate were added to ABS, HIPS and modified PPE respectively, to prepare expandable molding material mixtures.

Said expandable molding material mixture was heated and melted in the heating cylinder of the injection-molding machine to decompose said blowing agent mixture, and then said melted material mixture was injected into the mold cavity at an injection rate 90% and injection pressure of said melted material mixture 90%.

After said melted molding material mixture was fully injected, a secondary pressure (holding pressure) of 60% was effected in the cavity for 0.5 seconds, and then the resulting resin molded article was cooled for 40 seconds, and removed.

Variations in mold contraction ratios of the resulting molded articles (1) which were made of ABS, HIPS, and modified PPE respectively, and manufactured by the solid injection-molding method, the gas assist injection molding method, and the expansion injection-molding method are shown in Table 2. Referring to Table 2, it is recognized that in the case of the solid injection-molding method, the mold contraction ratios among the molded articles made of any kind of resin are always variable.

**Table 1**

| unit: per mill(‰) | | | | | |
|---|---|---|---|---|---|
| Material | Molding method | Virgin material | Recycled material | | |
| | | | 1 turn | 2 turns | 3 turns |
| ABS | Solid injection molding | 4.9 | 5.2 | 5.4 | 5.6 |
| | Gas assist injection molding | 5.7 | 5.7 | 5.7 | 5.7 |
| | Expansion injection molding | 7.2 | 7.2 | 7.2 | 7.2 |
| HIPS | Solid injection molding | 5.1 | 5.5 | 5.7 | 5.6 |
| | Gas assist injection molding | 5.7 | 5.7 | 5.7 | 5.7 |
| | Expansion injection molding | 7.2 | 7.2 | 7.2 | 7.2 |
| Modified PPE | Solid injection molding | 5.0 | 5.3 | 5.4 | 5.4 |
| | Gas assist injection molding | 5.7 | 5.7 | 5.7 | 5.7 |
| | Expansion injection molding | 6.8 | 6.8 | 6.8 | 6.8 |

### (Coated molded articles)

Using a paint containing a styrene modified acrylic resin as a main component having compatibility with ABS, HIPS and modified PPE (compounding ratio of coating materials is shown in Table 2) the underside of each molded article shown in Fig. 1 was coated with 15µm of said coating film. Said coated molded articles were then respectively crushed as is without removing said coating film, and then pelletized and remolded. Said molded articles were then respectively coated with said paint and crushed as is without removing said coating film and pelletized and remolded. Said remolding processes were then repeated.

Variations in the mold contraction ratios of the resulting molded articles (1) which were made of ABS, HIPS, and modified PPE respectively and manufactured by the solid injection-molding method, the gas assist injection-molding method, and the expansion injection-molding method are shown in Table 3. Referring to Table 3, it is recognized that in the case of the solid injection-molding method, the mold contraction ratios of the molded articles made of any kind of resin are always variable.

**Table 2**

| | |
|---|---|
| Styrene modified acrylic resin | 31.1 |
| Titanium oxide | 10.8 |
| Moisture resistant pigment | 11.3 |
| Toluene | 16.0 |
| Xylene | 14.0 |
| IPA | 6.0 |
| Isobutanol | 10.6 |
| Additive | 0.2 |

**Table 3**

| unit: per mill(‰) | | | | |
|---|---|---|---|---|
| Material | Molding method | Recycled method | | |
| | | 1 turn | 2 turns | 3 turns |
| ABS | Solid injection molding | 5.1 | 5.3 | 5.7 |
| | Gas assist injection molding | 5.7 | 5.8 | 5.7 |
| | Expansion injection molding | 7.1 | 7.2 | 7.2 |
| HIPS | Solid injection molding | 5.3 | 5.8 | 5.9 |
| | Gas assist injection molding | 5.7 | 5.7 | 5.7 |
| | Expansion injection molding | 7.2 | 7.2 | 7.2 |
| Modified PPE | Solid injection molding | 5.3 | 5.6 | 5.4 |
| | Gas assist injection molding | 5.7 | 5.7 | 5.7 |
| | Expansion injection molding | 6.8 | 6.9 | 6.8 |

### (Recovering of mechanical properties: Adding recycle aid agents)

The following recycle aid agents were added to resins, respectively.

For ABS: An olefin group rubber graft copolymer wherein the nitrile group monomer and styrenic monomer are graft-copolymerized to the olefin group rubber.

For HIPS and modified PPE: An olefin group rubber graft copolymer wherein a styrenic monomer is graft polymerized to the olefin group rubber.

In every recycle, each recycle aid agent was added to the material mixture at every recycle turn 1, 2, and 3 to recover the mechanical properties. In each turn, the material mixtures containing recycle aid agents were injection-molded.

Variations in the mold contraction ratios among the resulting molded articles (1), being made of ABS, HIPS, and modified PPE respectively, and manufactured by the solid injection-molding method, the gas assist injection-molding method, and the expansion injection molding method are shown in the Table 4. Referring to Table 4, it is recognized that in the case of solid injection molding method, the mold contraction ratios of the molded articles made of any kind of resin are always variable.

**Table 4**

| unit: per mill(‰) | | | | |
|---|---|---|---|---|
| Material | Molding method | Recycled material | | |
| | | 1 turn | 2 turns | 3 turns |
| ABS | Solid injection molding | 5.2 | 5.3 | 5.5 |
| | Gas assist injection molding | 5.7 | 5.8 | 5.8 |
| | Expansion injection molding | 7.1 | 7.1 | 7.1 |
| HIPS | Solid injection molding | 5.3 | 5.5 | 5.9 |
| | Gas assist injection molding | 5.7 | 5.7 | 5.7 |
| | Expansion injection molding | 7.2 | 7.2 | 7.2 |
| Modified PPE | Solid injection molding | 5.3 | 5.5 | 5.5 |
| | Gas assist injection molding | 5.7 | 5.7 | 5.7 |
| | Expansion injection molding | 6.8 | 6.8 | 6.7 |

### (Mixing virgin resin materials)

ABS virgin resin pellets were mixed in with ABS being recycled in 2 turns with a tumbler, mixing ratio of the recycled ABS/virgin ABS being set to be 50/50 weight ratio, and pellets were prepared from said mixture.

Using said pellets, said articles (1) were injection-molded by the solid injection-molding method, the gas assist injection-moling method, and the expansion injection-molding method. The contraction ratios of the resulting molded articles(1) are respectively shown in Table 5.

**Table 5**

| unit: per mill(‰) | | |
|---|---|---|
| Material | Molding method | Recycled material |
| | | I turn |
| ABS | Solid injection molding | 5.2 |
| | Gas assist injection molding | 5.6 |
| | Expansion injection molding | 7.1 |

Additionally, a recycled resin material mixture containing PC and ABS recovered from discarded molded articles in the market, and virgin resin material were mixed together at a weight ratio of 50/50, and the resulting resin material mixture was injection-molded by the solid injection molding method, and the gas assist injection-molding method respectively, and the contraction ratios of the resulting molded articles are shown in Table 6.

**Table 6**

| unit: per mill(‰) | | |
|---|---|---|
| material | Molding method | Recycled material |
| | | 1 turn |
| PC/ABS | Solid injection molding | 5.5 |
| | Gas assist injection molding | 5.6 |

### (Adhesives)

Adhesive A wherein 20 parts by weight of AS was dissolved in 80 parts by weight of methyl-ethyl ketone (MEK), Adhesive B wherein 20 parts by weight of PS was dissolved in 80 parts by weight of MEK, and Adhesive C wherein 20 parts of styrene modified acrylic resin was dissolved in 80 parts by weight of MEK, were prepared respectively.

Said recycled molded article (1) made of ABS being recycled in 1 turn and said recycled molded article (1) made of ABS being recycled in 2 turns were bonded together by using Adhesive A or Adhesive C, and a pair of said recycled molded articles (1) made of ABS being recycled in 1 turn were bounded together using Adhesive B or Adhesive C.

The resulting molded article complexes were then respectively crushed and pelletized as is without removing said adhesives, and the resulting pellets were respectively injection-molded by the solid injection-molding method, the gas assist molding method, and the expansion-molding method. Variations in the mold contraction ratios of the resulting molded article complexes are shown in Table 7.

**Table 7**

| unit: per mill(‰) | | | |
|---|---|---|---|
| Material | Molding method | Mold contraction ratio Adhesive(A), and (B) | Mold contraction ratio Adhesive(C) |
| ABS | Solid injection molding | 5.2 | 5.3 |
| | Gas assist injection molding | 5.6 | 5.6 |
| | Expansion injection molding | 7.2 | 7.1 |
| HIPS | Solid injection molding | 5.3 | 5.0 |
| | Gas assist injection molding | 5.6 | 5.6 |
| | Expansion injection molding | 7.2 | 7.1 |

### (Olefinic resin)

Polypropylene (PP) was molded by the solid injection molding, and the gas assist injection molding in the same molding conditions as described above, and few sinks were observed in the resulting molded articles.

Said molded articles were then recycled, and variations in the molding contraction ratios of the resulting molded articles, as recycled in 1, 2, and 3 turns were shown in Table 8.

Referring to table 8, in the case of the solid injection molding, the mold contractions are always variable.

**Table 8**

| unit: per mill(‰) | | | | | |
|---|---|---|---|---|---|
| Material | Molding method | Virgin material | Recycled material | | |
| | | | 1 turn | 2 turns | 3 turns |
| PP | Solid injection molding | 16.1 | 16.8 | 16.5 | 16.2 |
| | Gas assist injection molding | 16.5 | 16.6 | 16.7 | 16.8 |

### (Recycle aid agent for PP)

Ten parts by weight of ethylene-α-olefin copolymer (EPM) as a recycle aid agent was added to each PP recycled in 1, 2 and 3 turns, and each recycled PP to which said recycle aid agent was added was molded by the solid injection-molding method and the gas assist injection molding method respectively.

Differences in the mold contraction ratios among the resulting molded articles being recycled are shown in Table 9. Referring to Table 9, in the case of the solid injection molding, the mold contractions are always variable.

**Table 9**

| unit: per mill(‰) | | | | |
|---|---|---|---|---|
| Material | Molding method | Recycled material | | |
| | | 1 turn | 2 turns | 3 turns |
| PP | Solid injection molding | 16.9 | 16.5 | 16.3 |
| | Gas assist injection molding | 16.7 | 16.7 | 16.8 |

### (Welding rod)

A pair of PP molded articles recycled in 1 turn were bonded together with a welding rod made of the same PP, a hot drier being used to melt both said PP molded articles and said welding rod. The resulting molded article complex was then crushed, and pelletized and remolded by the solid injection molding method and the gas assist injection molding method respectively, and the differences in the mold contraction ratios between the resulting molded articles are shown in Table 10.

**Table 10**

| unit: per mill(‰) | | |
|---|---|---|
| Material | Molding method | Mold contraction ratio |
| PP | Solid injection molding | 16.5 |
| | Gas assist injection molding | 16.7 |

### (Sprue, Runner, Inferior Molded Articles)

The solidified material mixtures accumulated in the sprue and the runner of the injection molding machine, and inferior molded articles were crushed respectively, and then 20 parts by weight of said crushed resin materials were mixed in with 80 parts by weight of virgin resin material, and then the resulting mixture was remolded by the solid injection molding method and the gas assist injection molding method. The contraction ratios of each molded article are shown in Table 11.

**Table 11**

| unit: per mill(‰) | | |
|---|---|---|
| Material | Molding method | Mold contraction ratio |
| ABS | Solid injection molding | 5.2 |
| | Gas assist injection molding | 5.6 |

The solidified material mixtures accumulated in the sprue and the runner of the injection molding machine and inferior molded articles generated during the POM molding process were crushed, and then 20 parts by weight of said crushed resin materials were mixed in with 80 parts by weight of virgin resin material, and then the resulting mixture was remolded by the solid injection molding method and the gas assist injection molding method. The contraction ratios of each molded article are shown in Table 12.

**Table 12**

| unit: per mill(‰) | | |
|---|---|---|
| Material | Molding method | Mold contraction ratio |
| POM | Solid injection molding | 16.6 |
| | Gas assist injection molding | 16.8 |

The contraction ratios shown in Table 1 and Tables 3 to 12 were acquired by a three dimensional measuring instrument, after keeping each molded article at 23°C for 72 hours, wherein the contraction ratio=(real size of the mold-real size of the molded article) ÷real size of the mold ×1000.

As described above in a case where the molded article is molded by the gas assist injection molding method or the expansion injection molding method, the mold contraction ratio of said molded article may be constant, and not be influenced by the use of the virgin resin material or by the number of recycling turns, so that a means by which to cope with the differences of the mold contraction as related to the number of recycling turns may be unnecessary.

### (Molding sheeting)

AAS containing 20 MASS% of AuSt-g-AR wherein An and St are graft copolymerized to AS was extrusion molded at 260°C to manufacture sheeting material.

### (Printing)

A printing ink containing styrene modified acrylic resin having compatibility with styrenic resin such as ABS resin and the like as a vehicle was printed on said sheeting material to produce a seal.

### (Molded article)

A molded article made of ABS was molded.

### (Coating)

A white paint containing styrene modified acrylic resin as a vehicle and titanium dioxide as a pigment was coated on the surface of said molded article, and further the same ink used for printing said seal, was printed on said molded article's coated surface of said molded article.

### (Sticking)

Said seal was stuck on the surface of said molded article using an adhesive containing said AnSt-g-AR, said styrene modified acrylic resin, a plasticizer, and a solvent mixture consisting of ethyl acetate and toluene.

### (Recycling)

Said ABS molded article with coating film, printing film, said seal on its surface, was crushed, as is, without separating said coating film, said printing film, and said seal and the resulting crushed molded article was then pelletized, thus obtaining recycled resin pellets from said molded article.

The Izod impact strength of said recycled resin pellets was determined, to be 16.7Kg/cm², lower than the Izod impact strength of the virgin resin material (19.7Kg/cm²).

### (Recovering mechanical properties)

To recover the mechanical properties of said recycled resin pellets, 5 MASS% of AnSt-g-EPDM containing dycyclopentadiene was added to said recycled resin pellets, and the Izod impact strength of said recycled resin pellets in which said AnSt-g-EPDM was added was 20.7kg/cm² , and the recovery of the impact strength was recognized.

### (Molding)

Said recycled resin pellets whose mechanical properties were recovered as described above were molded by the common solid injection-molding, the gas assist injection molding wherein gas was injected into the mold through the sprue and the runner, the expansion injection molding, applying and not applying the GCP method respectively, to manufacture molded articles. The mold contraction ratios of the resulting molded articles were determined, and the results are shown in Table 13.

**Table 13**

| unit: per mill(‰) | | | | |
|---|---|---|---|---|
| | Molding method | | | |
| resin | Solid injection molding | Gas assist injection molding | Expansion injection molding (applying GCP) | Expansion injection molding (not applying GCP) |
| Virgin resin | 4.9 | 5.6 | 6.8 | 6.8 |
| Recycled material | 5.1 | 5.6 | 6.8 | 6.8 |

### (Coating)

Each molded article was coated again, and the coating property and coating film property were evaluated.

For said evaluation, a common cross-cut adhesion test (primary bonding property), and a cross-cut adhesion test after said molded article was dipped in hot water(40°C) for about 100 hours (secondary bonding property), were carried out.

Further, said molded article being manufactured by the expansion injection molding not applying GCP method, had a swirl mark on its surface, and said surface was sanded with the emery paper(#380) and then coated twice with said paint, the first(under) coating to reduce the swirl mark on said molded article's surface.

### (Deformation)

As described above, it was confirmed that in a case where only the surface of said molded article was coated with said paint, warping and deformation were generated in said molded article manufactured by the solid injection molding method, since its internal stress was relaxed by the solvent of said paint, while less warping and less deformation were generated in both said molded articles manufactured by the gas assist injection molding method and the expansion injection molding method, since their internal stress of said molded articles were absorbed by their inner respective hollow areas or foamed structures of said molded articles, resulting in less residual stress remaining in said molded articles, reducing the warping and deformation caused by coating.

### [EXAMPLE 2]

ABS resin (Cykolac ZFJ5:UBE Cycon Co.,) whose flammability grade is HB and ABS resin (Cykolac ZFJ15:UBE Cycon Co., ) whose flammability grade is Vo-5V were respectively molded to manufacture molded articles, and the resulting molded articles were respectively crushed. The resulting crushed molded articles were mixed together at weight ratios of HB/(Vo-5V)=25/75, 50/50, and 75/25 respectively and the resulting mixtures were pelletized respectively to obtain pellets. The resulting pellets were molded again to obtain molded articles (A-1, A-2, A-3). The contraction ratios of the resulting molded articles were determined by the flammability test according to 94 UL. The results are shown in Table 14.

In another case, each crushed molded article was pelletized and then the resulting pellets were mixed together at weight ratios of HB/ (Vo-5V)= 25/75, 50/50, 75/25, and the resulting mixtures were molded respectively to obtain molded articles (A-4, A-5, A-6).

The contraction ratios of the resulting molded articles were determined using the same test as described above. The results are also shown in Table 14.

**Table 14**

| Molded article | Virgin resin | A-1 | A-2 | A-3 | A-4 | A-5 | A-6 |
|---|---|---|---|---|---|---|---|
| Weight ratio (HB/V₀-5V) | | 25/75 | 50/50 | 75/25 | 25/75 | 50/50 | 75/25 |
| Mold contraction ratio (‰) | 5.6 | 5.6 | 5.7 | 5.6 | 5.6 | 5.6 | 5.6 |

Referring to the results shown in Table 14, it is confirmed that a molded article made of a mixture of the resin materials whose flame retardancies are different, when mixed together, has substantially the same contraction ratio as that of the virgin resin material. Further, it is confirmed that the molded article made of the mixture of crushed molded materials whose flame retardancies are different, exhibits substantially the same contraction ratio as that of the molded article made of the mixture of pellets whose flame retardancies are different.

### [EXAMPLE 3]

Using ABS resin (Styrac 191, white color, Asahi Chemical Industry CO., Ltd., simply hereafter to be referred to as 191) and ABS resin (Techono ABS 170, blue color, Techno Polymer Co., Ltd., simply hereafter to be referred to as 170) as molding materials, molded articles were manufactured by the injection molding. The resulting molded articles were crushed and mixed together at weight ratios of (191 crushed articles)/ (170 crushed article)=25/75, 50/50, 75/25, and the resulting mixtures were pelletized respectively and the resulting pellets were molded respectively to obtain molded articles (B-1, B-2, and B-3). The contraction ratios of the resulting molded articles (B-1, B-2, and B-3) were determined by the same method as described in EXAMPLE 2. The results are shown in Table 15.

In another case, 191 crushed article and 170 crushed article were respectively pelletized and the resulting pellets were respectively mixed together at weight ratios of (191 pellet)/(170 pellet)=25/75, 50/50 and 75/25, and the resulting mixtures were respectively molded to obtain molded articles (B-4, B-5, and B-6).

The contraction ratios of the resulting molded articles (B-4, B-5, and B-6) were determined by the same method as described in EXAMPLE 2.

The results are shown in Table 15.

**Table 15**

| Molded article | Virgin resin (191) | Virgin resin (170) | B-1 | B-2 | B-3 | B-4 | B-5 | B-6 |
|---|---|---|---|---|---|---|---|---|
| Weight ratio (191/170) | | | 25/75 | 50/50 | 75/25 | 25/75 | 50/50 | 75/25 |
| Mold contraction ratio(‰) | 5.6 | 5.6 | 5.6 | 5.7 | 5.6 | 5.6 | 5.7 | 5.7 |

Referring to the results in Table 15, it is confirmed that the contraction ratios of said molded article made of the mixture containing resin materials whose manufactures, grades and compositions were different were substantially the same as those of the molded articles made of the virgin resin materials. Further, in a case where the molded article is made of other crushed articles with mixtures whose compositions were different, and in a case where the molded article is made of pellets with different mixtures and composition ratios, substantially the same ratios of contraction were obtained and confirmed.

### [EXAMPLE 4]

ABS resin (Styrac 191) was molded to manufacture a molded article and the resulting mold article was crushed and pelletized. The resulting pellets are to be the pellets recycled in one turn (one turn pellets). Using said one turn pellets, a molded article was manufactured by molding and the resulting molded article was crushed and pelletized.

The resulting pellets are to be the pellets recycled in two turns (two turns pellets). Further, three turns pellets, four turns pellets were manufactured in the same manner as described above.

The resulting one-four turn pellets and the virgin resin were mixed at weight ratios of the virgin resin/one turn/ two turns/ three turns/ four turns = 20/20/20/20/20, 10/10/20/30/30, and 5/10/25/25/35 and the resulting mixtures were pelletized respectively. Using the resulting pellets molded articles (C. D. and E) were respectively manufactured by molding and the contraction ratios of the resulting molded articles were respectively determined using the same test as described above. The results are shown in Table 16.

**Table 16**

| Molded article | C | D | E |
|---|---|---|---|
| Weight ratio (virgin resin/1 turn/2 turns/3 turns/ 4 turns) | 20/20/20/20/20 | 10/10/20/30/30 | 5/10/25/25/35 |
| Mold contraction ratio(‰) | 5.6 | 5.6 | 5.6 |

Referring to the results shown in Table 16, said respective molded articles have substantially the same contraction ratios notwithstanding the mixing ratios of said resin materials whose recycle turn numbers were all different.

### POSSIBLITY OF INDUSTRIAL USE

In the present invention, the melted material mixture fills uniformly in the mold by the pressure of gas which is injected into the mold when said melted material mixture is injected into the mold, or by the expansion pressure generated by the decomposition of the blowing agent, and the contraction of the resulting molded article during cooling is also suppressed, and as a result, the recycled resin molded article manufactured in the present invention has fewer defects such as sink, warping, bending, and the like, and a good dimensional stability, and hence a high commercial value.

## Claims

1. A method for manufacturing a molded article comprising molding a recycled thermoplastic resin or a mixture of said recycled thermoplastic resin and virgin thermoplastic resin, said mixture containing said recycled thermoplastic resin in an amount of at least 1% by weight, by gas assist injection molding or expansion injection molding, wherein said recycled thermoplastic resin is recovered from a discarded thermoplastic resin molded article

2. A method for manufacturing a molded article made of recycled thermoplastic resin in accordance with claim 1, wherein said thermoplastic resin is styrenic resin

3. A method for manufacturing a molded article made of recycled thermoplastic resin in accordance with claim 1, wherein said thermoplastic resin is olefinic resin

4. A method for manufacturing a molded article made of recycled thermoplastic resin in accordance with claims 1 to 3, wherein said thermoplastic resin contains diene group rubber and /or olefinic rubber and/or acrylic rubber

5. A method for manufacturing a molded article made of recycled thermoplastic resin in accordance with claims 1 to 4, wherein a rubber like material having compatibility with said thermoplastic resin is added to said recycled thermoplastic resin or said mixture as a recycle aid agent in an amount of 1 to 5% by weight when said recycled thermoplastic resin or said mixture is injection-molded

6. A method for manufacturing a molded article made of recycled thermoplastic resin in accordance with claim 5, wherein said thermoplastic resin is styrenic resin and said rubber like material is a graft polymer in which diene group rubber and/or olefinic rubber and/or acrylic rubber is(are) a trunk and a polymer chain having compatibility with said styrenic resin is a grafted polymer chain

7. A method for manufacturing a molded article made of recycled thermoplastic resin in accordance with claim 5, wherein said thermoplastic resin is olefinic resin and said rubber like material is ethylene- α-olefin copolymer

8. A method for manufacturing a molded article made of recycled thermoplastic resin in accordance with claims 1 to 7, wherein paint or ink using thermoplastic resin having compatibility with said thermoplastic resin or thermosetting resin as a vehicle is applied to the surface of said molded article made of recycled thermoplastic resin

9. A method for manufacturing a molded article made of recycled thermoplastic resin in accordance with claims 1 to 8, wherein sheeting made of thermoplastic resin having compatibility with said thermoplastic resin of said molded article is stuck on the surface of said mold using an adhesive made of thermoplastic resin having compatibility with said thermoplastic resin of said molded article or thermosetting resin

10. A method for manufacturing a molded article made of recycled thermoplastic resin in accordance with claims 1to 9, wherein said molded article made of recycled thermoplastic resin consists of a main body and attachment(s) attached to said main body using an adhesive or a welding molding rod, and said adhesive being made of thermoplastic resin having compatibility with said thermoplastic resin of said molded article or thermosetting resin and said welding rod being made of thermoplastic resin having compatibility with said thermoplastic resin of said molded article
